# EUROPÄISCHE PATENTSCHRIFT

(11) **EP 1 173 279 B1**
(45) Veröffentlichungstag und Bekanntmachung des Hinweises auf die Patenterteilung: **17.09.2003**
(21) Anmeldenummer: 00929378.8
(22) Anmeldetag: 18.04.2000
(51) Int. Cl.: B01L 3/02, B01J 4/02

(54) **VERFAHREN UND VORRICHTUNG ZUM AUFBRINGEN KLEINER FLÜSSIGKEITSMENGEN**
METHOD AND DEVICE FOR APPLYING SMALL QUANTITIES OF LIQUID
PROCEDE ET DISPOSITIF PERMETTANT DE DEPOSER DE PETITS VOLUMES DE LIQUIDE

(30) Priorität: 27.04.1999 DE 19919135
(43) Veröffentlichungstag der Anmeldung: 23.01.2002
(73) Patentinhaber: BASF AKTIENGESELLSCHAFT, 67056 Ludwigshafen (DE)
(72) Erfinder: EIPEL, Heinz, D-64625 Bensheim (DE); EMIG, Stefan, D-67061 Ludwigshafen (DE); HAUER, Siegfried, D-67157 Wachenheim (DE); WEISHAAR, Walter, D-67269 Grünstadt (DE)
(74) Vertreter: Isenbruck, Günter, Dr.
(86) Internationale Anmeldenummer: EP0003497
(87) Internationale Veröffentlichungsnummer: WO00064584

(56) Entgegenhaltungen:
- DE-A- 3 113 345
- FR-A- 2 086 394
- US-A- 5 763 278

## Beschreibung

Die vorliegende Erfindung bezieht sich auf Verfahren und eine Vorrichtung zum Aufbringen von kleinen Flüssigkeitsmengen, beispielsweise zur parallelen Analytik zum Sequenzvergleich von DNA.

Aus dem Stand der Technik, aus der Veröffentlichung von Shena et al. in Science 270, 467-470, 1995 und der von Cheny et al, in Nature Genetics Supplement 21, S. 15-19, 1999 ist es bekannt, für viele gleichzeitig parallel ablaufende Analysen Bindungspartner in einem dichten Rasterfeld auf Oberflächen aufzubringen.

US 5,763,278 bezieht sich auf das Pepitieren von kleinen Volumina. Die offenbarte Vorrichtung umfasst eine Pepetiernadel, einen Impulsgenerator, ein Ventil sowie eine angetriebene Kolbenpumpe. Mittels eines Rohrsystemes sind die Pepetiernadel und ein Vorratsbehälter miteinander verbunden, wobei das Rohrsystem und der Vorratsbehälter ein im wesentlichen inkompressibles Fluid enthalten. Der Impulsgenerator ist mit der Einrichtung verbunden und ist mit der Einrichtung sowie mit dem im Rohrsystem aufgenommenen inkompressiblen Medium verbunden, so dass eine mechanische Impulskraft von zumindest 0,01 Ns auf das im Rohrsystem aufgenommene inkompressible Fluid zur Absonderung eines Tropfens aus der Debitiernadel erzeugt wird.

DE 31 13 345 A1 bezieht sich auf ein Dosierventil für viskose Flüssigkeiten. Es wird ein Dosierventil vorgeschlagen, welches insbesondere für hochviskose Flüssigkeiten geeignet ist und eine Ventildurchführung für einen Dosierschlauch umfasst. Es ist mindestens ein gegen den Schlauch drückbarer Stempel vorgesehen, wobei der Stempel aus einem Abquenchstempel besteht, der den flexiblen Schlauch in Ruhestellung abklemmt und neben diesem Stempel ist mindestens ein weiteres, auf den Dosierschlauch einwirkendes Druck-Zug-Element, insbesondere ein Druckelement vorgesehen. Dessen Verschiebung ist gleichzeitig mit der Verschiebung des Abquetschstempels steuerbar und zwar in der Art, dass der Abquetschstempel den Schlauch abklemmt, während der Druckstempel geöffnet wird und dabei einen Rücksaugeffekt auf die Flüssigkeit ausübt.

Das Aufbringen kleiner Flüssigkeitsmengen erfolgte bisher nach einem der nachfolgend kurz skizzierten Verfahren. Wird beispielsweise nach dem "Füllfederhalter"-Verfahren vorgegangen, werden die Flüssigkeitsmengen mit einem einer Schreibfeder ähnlichen Werkzeug auf die Oberflächen aufgetupft. Bei dieser Vorgehensweise ist von Nachteil, daß die mit diesem Verfahren aufgebrachte Flüssigkeitsmenge sehr stark sowohl von der Oberflächenspannung der Flüssigkeit einerseits in Bezug auf das Werkzeug und andererseits in Bezug auf die Oberfläche abhängig ist. Folglich lassen sich die aufzubringenden Flüssigkeitsmengen nur schwierig dosieren. In der Regel ist das Benetzungsverhalten der aufzubringenden Flüssigkeit zwar bekannt, aber das Zusammenspiel der Flüssigkeit mit dem Werkzeug und der Oberfläche beeinflußt die an der Oberfläche schließlich anhaftende Flüssigkeitsmeuge nicht unerheblich.

Gemäß einem weiteren Verfahren zum Aufbringen von Flüssigkeiten wird ein sehr schnell schaltendes Ventil benutzt, welches zum Aufbringen eines Flüssigkeitstropfens auf eine Oberfläche eine unter Druck stehende Leitung kurzzeitig öffnet und dann wieder verschließt. Analysematrices mit sehr dichter Benetzungsdichte lassen sich gemäß dieses Verfahrens nur schwer erzeugen; die technischen Anforderungen an das schnell schaltende Ventil, welches die Druckleitung öffnet und wieder verschließt sind außerordentlich hoch, insbesondere je höher die Anforderungen an die Genauigkeit der zu dosierenden Flüssigkeitsmenge sind.

Bei Tintenstrahldruckern ist es gängige Praxis, piezoelektrische Aktuatoren einzusetzen. Mittels der hierzu verwendeten Piezoaktuatoren lassen sich sehr kleine Flüssigkeitsmengen zwar sehr genau dosieren, jedoch ist der technische Aufwand dafür sehr hoch. Die Pipettierspitzen mit integrierten Piezoelementen sind sehr teuer und mechanisch außerordentlich empfindlich.

Der Nachteil des oben kurz skizzierten "Füllfederhalter"-Verfahrens liegt in der sehr großen Schwankungsbreite der mittels dieses Verfahrens aufgebrachten Flüssigkeitsmengen. Der wesentliche Nachteil der Verfahren unter Verwendung eines extrem schnell schaltenden Ventils und des letztgenannten Verfahrens unter Gebrauch von Piezoelementen ist darin zu sehen, daß zum Aufsaugen der zu pipettierenden Flüssigkeit eine motorgetriebene Dosierspritze benötigt wird. Der technische Aufwand dafür ist außerordentlich hoch, ferner stellt sich das Problem ein, daß sich das Volumen in der Schlauchverbindung zwischen der Dosierspitze und dem Pipettierkopf mit der Temperatur sowie durch Bewegung des Schlauches ändert.

Ausgehend vom skizzierten Stand der Technik liegt der Erfindung die Aufgabe zugrunde, den apparativen Aufwand für ein Pipettieryerfahren für kleine Flüssigkeitsmengen erheblich zu senken und die mittels des Pipettierverfahrens aufzubringenden Flüssigkeitsmengen genau zu dosieren, sowie die Erzeugung einer hohen Belegungsdichte auf einem Substrat zu gewährleisten.

Erfindungsgemäß wird die Aufgabe dadurch gelöst, daß bei einem Verfahren zum Aufbringen kleiner Flüssigkeitsmengen auf ein Substrat mittels einer Pipettierspitze, die mit einer flexiblen Zuleitung verbunden ist, zum Ansaugen der Flüssigkeitsmenge eine Volumenvergrößerung in der Zuleitung erzeugt wird und zum Aufbringen von Flüssigkeitstropfen ein Impuls auf diese hervorgerufen wird, der sich auf die darin befindliche Flüssigkeitsmenge überträgt.

Gemäß einer zum erfindungsgemäßen Verfahren korrespondierenden Vorrichtung zum Aufbringen kleiner Flüssigkeitsmengen auf ein Substrat mit einer Kapillare, die mit einer flexiblen Zuleitung verbunden ist, sind der flexiblen Zuleitung voneinander unabhängig betätigbare Einrichtungen zur Querschnittsveränderung der Zuleitung zugeordnet, wobei an dieser ein einen Impuls erzeugender Hammer vorgesehen ist, dessen eine Volumenänderung an der Zuleitung bewirkender Betätigungsweg einstellbar ist.

Die mit der erfindungsgemäßen Lösung erzielbaren Vorteile sind vielfältiger Natur. Auf die erfindungsgemäße Weise lassen sich genau dosierbare, kleinste Flüssigkeitsmengen reproduzierbar und störungsfrei auf Substrate und Oberflächen aufbringen unter Verzicht auf einen kostspieligen und mechanisch hochempfindlichen piezoelektrischen Pipettierkopf. Die einfache und preiswerte Pipettierspitze kann bei Bedarf leicht ersetzt werden; es können nach einem Ansaugvorgang mehrere Impulse auf die Zuleitung übertragen werden, so daß mehrere Flüssigkeitstropfen in dichter Abfolge präzise aufbringbar sind.

Gemäß weiteren erfindungsgemäßen Weiterbildungen des erfindungsgemäßen Verfahrens sind die Einrichtung zur Querschittsveränderung der elastischen Zuleitung als Quetschventile ausgeführt, die beispielsweise auf elektromagnetischem Wege betätigbar sein können. Eines dieser Quetschventile ist beim Ansaugvorgang geschlossen und wird nur zum Spülen der Zuleitung geöffnet, während das verbleibende Quetschventil zum Ansaugen geöffnet wird, wodurch sich das Innenvolumen der elastischen Zuleitung vergrößert und eine Flüssigkeitsmenge in dieser aus einem Vorlagengefäß aufgenommen werden kann. Zur Ausführung der Eintauchbewegung in das Vorlagengefäß können Pipettierspitze und flexible Zuleitung an einer auf- und abbewegbaren Schiene aufgenommen sein, die eine Zustellbewegung der Pipettierspitze in das Vorlagengefäß oder an das Substrat ermöglicht. Die Schiene kann auf pneumatischem, elektromotorischem Wege oder auch elektromagnetisch bewegt werden.

Zur Bemessung der anzusaugenden Flüssigkeitsmenge kann an der das Ansaugen dieser Menge bewirkenden Einrichtung zur Querschnittsveränderung ein justierbarer Anschlag vorgesehen sein, mit dem der den Ansaugvorgang bewirkende Stellweg justierbar ist. Die aufzubringenden Flüssigkeitsmengen liegen im Bereich zwischen 100pl und 1µl, vorzugsweise im Bereich zwischen 500pl und 10nl, wozu eine hochgenaue und reproduzierbare Dosierbarkeit der Flüssigkeitstropfen unbedingt erforderlich ist.

Während des Aufbringens der kleinen Flüssigkeitsmenge auf das Substrat ist die flexible Zuleitung an einem Ende durch eine Einrichtung zur Querschnittsveränderung verschlossen und mittels eines betätigbaren Hammerelementes beispielsweise, lassen sich Impulse auf die flexible Zuleitung ausüben. Der Hammer kann entweder elektromagnetisch oder auch auf pneumatischem Wege betätigbar sein, oder mechanisch mittels einer Feder, vorgespannt mittels eines Elektromagneten, erzeugt werden. Die flexible Zuleitung im Bereich der den Impuls übertragenden Stelle, eingebettet in einer Halterung mit einer die flexible Zuleitung umgebenden Bohrung, wird durch den Impuls des Hammers entsprechend eines voreinstellbaren Betätigungsweges des Hammers gequetscht und sondert eine entsprechend der durch den Impuls bewirkten Volumenänderung dosierten Flüssigkeitstropfen durch die Pipettierspitze auf das Substrat ab. Mittels eines justierbaren Anschlags, einstellbar über Einstellmittel, läßt sich die durch den Impuls erzeugbare Volumenänderung in der flexiblen Zuleitung einstellen.

Nach Entleerung der flexiblen Zuleitung durch die erzeugbaren Impulse lassen sich die Quetschventile öffnen um damit eine Spülflüssigkeit unter Druck in die flexible Zuleitung in die Pipettierspitze zu Reinigungszwecken einzuführen. Der Pipettierkopf wird anschließend in eine Waschposition gefahren und anschließend das Spülmedium wieder ausgebracht.

Die als Pipettierspitze verwendbare Glaskapillare mit kleinster Austrittsöffnung kann durch Erhitzen der Kapillare an einem Ende hergestellt werden, wobei als Hitzeschild eine mit einer Bohrung versehene Metallplatte verwendbar ist. Die Kapillare rotiert während des Erhitzens, so daß diese gleichmäßig bis zur Erweichung erwärmt werden kann. Durch die Oberflächenspannung des Glases verengt sich hierbei die Öffnung der Kapillare. Zur Erzielung einer bestimmten Oberflächenspannung kann die Glaskapillare ganz oder teilweise beispielsweise mit einem Silan beschichtet werden.

Anhand der Zeichnung lassen sich das erfindungsgemäße Verfahren und die dazugehörige Vorrichtung eingehender beschreiben.

Es zeigt:
- Figur 1: die Seitenansicht einer erfindungsgemäßen Vorrichtung zum Aufbringen von kleinen Flüssigkeitsmengen und
- Figur 2: die Ansicht einer Einrichtung zur Querschnittsveränderung einer flexiblen Zuleitung.

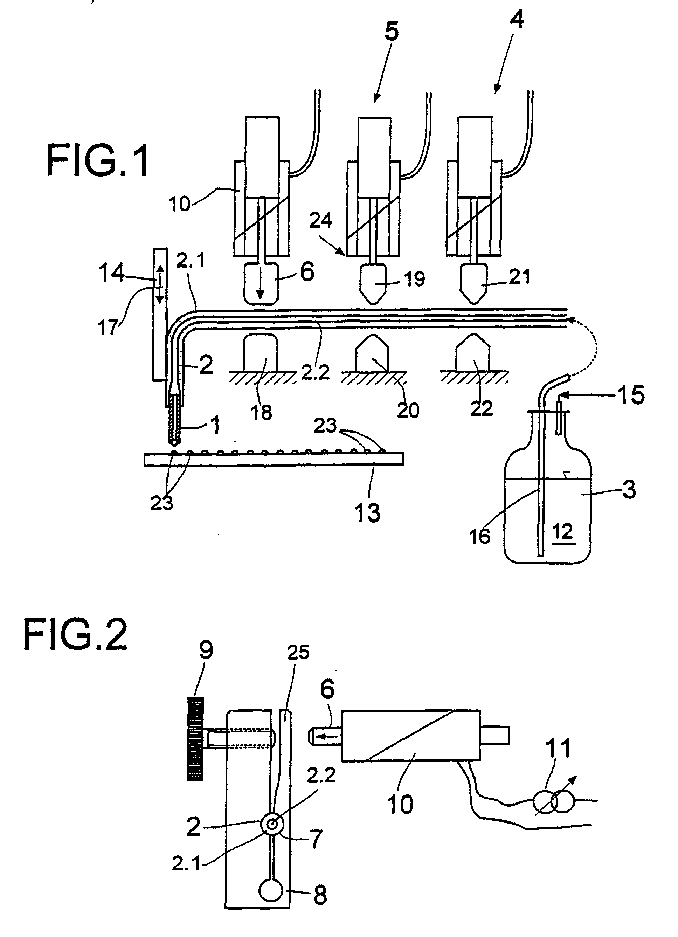

In der Darstellung gemäß Figur 1 ist eine erfindungsgemäße Vorrichtung zum Aufbringen von kleinen Flüssigkeitsmengen dargestellt.

Eine als Glaskapillare ausgeführte Pipettierspitze 1 ist in ein offenes Ende einer flexiblen Zuleitung 2, beispielsweise ausgebildet als elastischer Schlauch, eingeführt. Das andere Ende der flexiblen Zuleitung 2 kann bei Bedarf mit einem unter Druck stehenden Spülflüssigkeitsbehälter 3 verbunden werden, in welchen ein Ansaugrohr 16 eingelassen ist, durch welches entsprechend des gestrichelt wiedergegebenen Pfeiles das Spülmedium in die zu reinigende flexible Zuleitung 2 geführt werden kann. Die Pipettierspitze 1 wird dazu in eine Waschposition verfahren, in welcher das Spülmedium vor einem Ansaugvorgang die flexible Zuleitung 2 wieder verläßt.

Zum Ansaugen einer Flüssigkeitsmenge, die in kleinsten Dosen zu pipettierenden Flüssigkeitstropfen 23 auf das Substrat 13 aufgebracht wird, kann beispielsweise ein erstes Quetschventil 4 geschlossen werden. Dieses drückt zwischen Quetschkegel 21 und einem gegenüberliegend angeordneten Gegenstück 22 den Querschnitt 2.2 der flexiblen Zuleitung 2 zusammen und verschließt die Zuleitung 2 somit. Das zweite, die Zuleitung 2 zunächst zusammendrückende Quetschventil 5 wird nunmehr geöffnet, während die Kapillare 1 in einem Vorlagengefäß eingetaucht ist, welches hier nicht näher dargestellt ist. Durch das Zurückfahren des Quetschkegels 19 vom gegenüberliegenden Gegenstück 20, erfährt die flexible Zuleitung 2, die als elastischer Kapillarschlauch ausgebildet sein kann, eine Vergrößerung ihres Innenvolumens, wodurch eine Flüssigkeitsmenge angesaugt werden kann. Mittels eines dem Quetschventil 5 zugeordneten verstellbaren Anschlages 24 kann die anzusaugende Flüssigkeitsmenge justiert werden, die in der flexiblen Zuleitung 2 aufgenommen wird.

Nach Abschluß des Ansaugvorganges - die flexible Zuleitung 2 ist nunmehr mit einem Flüssigkeitsvorrat versehen - wird die flexible Zuleitung 2 samt an dieser aufgenommener Pipettierspitze 1 durch Bewegung der Schiene 14 gemäß des Doppelpfeiles 17 aus dem Vorlagengefäß hinausbewegt und in die in Figur 1 dargestellte Position oberhalb eines Substrates 13 gebracht. Die Bewegung der Schiene 14, an der die Zuleitung 2 samt Pipettierspitze 1 aufgenommen ist, kann pneumatisch, elektromotorisch oder auch elektromagnetisch erfolgen.

Die flexible Zuleitung 2 besteht aus einem elastischen, verformbaren Material mit einer Wandstärke 2.1, die einen Querschnitt 2.2 begrenzt, in welchem nunmehr eine zuvor eingestellte Flüssigkeitsmenge, angesaugt aus dem Vorlagengefäß, enthalten ist. In Figur 1 ist zwischen der Schiene 14 und dem Quetschventil 5 ein Hammer 6 angeordnet, der sich im gezeigten Ausführungsbeispiel elektromagnetisch betätigen läßt. Es wäre auch eine pneumatische, hydraulische oder durch Federvorspannung zu realisierende Betätigung denkbar. Je nach dem, wird mittels des hammerförmigen Elements 6 ein Impuls auf die flexible Zuleitung 2 übertragen - das erste Quetschventil 4 ist geschlossen - überträgt sich der Impuls auf den im Inneren der flexiblen Zuleitung 2 enthaltenen Flüssigkeitsvorrat und ein Flüssigkeitstropfen 23 kann durch die Pipettierspitze 1 auf die Oberfläche des Substrats 13 aufgebracht werden. Je nach dem wie groß die in der Zuleitung 2 bevorratete Flüssigkeitsmenge ist, kann durch das Erzeugen mehrerer Impulse auf die Zuleitung 2 eine Vielzahl von Flüssigkeitstropfen 23 auf die Substratoberfläche 13 aufgebracht werden, solange bis der in der Zuleitung 2 enthaltene Flüssigkeitsvorrat erschöpft ist.

Zur Dosierung der kleinen Flüssigkeitsmenge, die in Gestalt nacheinander aufgebrachter Flüssigkeitstropfen 23 auf die Oberfläche des Substrats 13 gelangt, sei auf die Darstellung gemäß Figur 2 verwiesen.

In dieser Darstellung ist eine Ansicht einer Einrichtung zur Querschnittsveränderung einer flexiblen Zuleitung wiedergegeben.

Der Impuls auf die flexible Zuleitung 2 kann beispielsweise mittels eines in dieser Darstellung gezeigten justierbaren Anschlags 25 eingestellt werden. In einer Halterung 8 ist eine die flexible Zuleitung 2 umfassende Bohrung 7 eingebracht. In der Halterung 8 ist eine schlitzförmige Öffnung eingebracht, die sich nach oben aufweitet und den justierbaren Anschlag 25 vom Korpus der Halterung 8 trennt. Gegenüber des justierbaren Anschlags 25 befindet sich der Hammerkopf 6 einer den Impuls auf die Zuleitung 2 übertragenden Einrichtung 10. Diese Einrichtung kann beispielsweise als Elektromagnet ausgeführt sein, dessen Betätigungsstrom durch eine Steuereinrichtung 11 kann in einen günstigen Bereich gebracht werden kann. Mittels der Steuereinrichtung 11 beispielsweise kann auch die Impulsfrequenz eingestellt werden. In der Halterung 8 befindet sich des weiteren eine Stellschraube 9, die den Betätigungsweg des durch den Hammerkopf 6 betätigbaren, justierbaren Anschlag 25 festlegt und damit die Verformung und die Volumenänderung des Querschnitts 2.2 der Zuleitung 2 begrenzt. Somit lassen sich Flüssigkeitstropfen 23 genauestens dosieren; im Ausführungsbeispiel ist die Flüssigkeitsmenge zwischen 100pl und 1µl oder zwischen 500pl und 10nl dosierbar, je nach Anwendungsfall. Mittels dieser Vorgehensweise lassen sich auf einfachste Weise geringste Flüssigkeitsmenge reproduzierbar dosieren und störungsfrei auf die Oberfläche eines Substrats 13 aufbringen. Ein aufwendiger technischer piezoelektrischer Pipettierkopf entfällt. Die Belegungsdichte ist nunmehr lediglich als Funktion des Substratvorschubes und des Durchmessers der Kapillaren und der Schläuche begrenzt und in weitem Bereich einstellbar.

Die Pipettierspitze 1 ist als Glaskapillare außerordentlich leicht herstellbar und läßt sich sehr einfach in ein offenes Ende der Zuleitung 2 einfuhren. Die Glaskapillare 1 ist somit leicht auswechselbar, wodurch die Pipettiervorrichtung rasch umrüstbar ist und schnell mit Pipettierspitzen 1 größeren Durchmessers für etwas größere auf ein Substrat 13 aufzubringende Flüssigkeitsmenge versehbar ist. Die Pipettierspitze 1 kann einfach durch Erhitzen einer Glaskapillare erzeugt werden, beispielsweise über einer Gasflamme oder einer andere Wärmequelle. Zur Begrenzung der Wärmezufuhr nur auf das äußerste Ende der Kapillare 1, kann ein geeignetes Hitzeschild in Gestalt einer mit einer Bohrung versehenen Metallplatte verwendet werden. Während der Erhitzung rotiert das Ende der Glaskapillare 1 vorzugsweise, um eine gleichmäßige Wärmeverteilung zu gewährleisten. Zur Messung des Durchmessers der Öffnung der Glaskapillaren kann während des Herstellprozesses sehr vorteilhaft eine Videoeinrichtung verwendet werden.

Schließlich kann zur Erzeugung einer definierten Oberflächenspannung die Glaskapillare 1 mit einem die Oberflächenspannung geeignet beeinflussenden Material wie beispielsweise einem Silan beschichtet werden. Die Beschichtung der Kapillare 1 mit einem geeigneten Silan kann auf der gesamten mit der Flüssigkeitsmenge in Kontakt stehenden Fläche erfolgen oder nur auf einem Teil davon, z.B. nur auf der Außenfläche der Kapillare..

Neben der elektromagnetischen Auslösung eines Impulses durch den Hammer 6, ist die Auslösung eines Impulses mittels einer vorspannbaren Feder ebensogut denkbar. Die Feder ihrerseits kann mittels eines Magneten vorgespannt werden und entsprechend der Ausstoßfrequenz der aufzubringenden Flüssigkeitstropfen 23 ausgelöst werden. Zur Bewegung der Schiene 14 in vertikale Richtung 17 ist neben den bereits aufgezählten Antriebsarten auch ein elektromotorischer Antrieb denkbar, ebenso wie für den Vorschub für das Substrat 13 relativ zur stationär aufgenommenen und der auf- und abbewegbaren Pipettierspitze 1 oder für die Pipettierspitze 1 relativ zu einem stationär aufgenommenen Substrat 13. Über die Einstellung der Vorschubwege von Pipettierspitze 1 relativ zum Substrat 13 und umgekehrt, lassen sich die Belegungsdichte der Substratoberfläche 13 mit Flüssigkeitstropfen 23 genau vorgeben, so daß eine parallele Analytik zum Sequenzvergleich von DNA möglich ist oder Protein-Bindungsanalysen durchgeführt werden können. Mittels des vorgeschlagenen Verfahrens und der vorgeschlagenen Vorrichtung lassen sich ebenso gut auch Optimierungen von Katalysatoren durchführen.

Es ist selbstverständlich ebenfalls möglich, mehrere Pipettieranlagen gemäß Figur 1 zusammen zu schalten, um größere Bereiche an Substrat mit gleichmäßiger Rasterdichte, aber unterschiedlichen Flüssigkeitstropfen zu benetzen. Jede dieser Pipettieranlagen kann auf ein ihr individuell zugeordnetes Vorlagengefäß zugreifen und somit je eine bestimmte aufzubringende Flüssigkeit zu Analysezwecken aufbringen.

### Teileliste

- 1: Kapillare
- 2: Zuleitung
- 2.1: Wandstärke
- 2.2: Querschnitt
- 3: Spülflüssigkeitsbehälter
- 4: Schlauch-Quetschventil
- 5: zweites Quetschventil
- 6: Hammer
- 7: Bohrung
- 8: Halterung
- 9: Stellschraube
- 10: Elektromagnet
- 11: Betätigungsstrom
- 12: Spülmedium
- 13: Substrat
- 14: Schiene
- 15: Stützen zur Druckzuführung
- 16: Rohr
- 17: Zustellrichtung
- 18: Amboß für Hammer 6
- 19: Quetschkegel
- 20: Gegenstück
- 21: Quetschkegel
- 22: Gegenstück
- 23: Flüssigkeitstropfen
- 24: justierbarer Anschlag zum Ansaugen
- 25: justierbarer Anschlag an Halterung 8

## Patentansprüche

1. Verfahren zum Aufbringen kleiner Flüssigkeitsmengen auf ein Substrat (13) mittels einer Pipettierspitze (1), die mit einer flexiblen Zuleitung (2) zum Ansaugen einer Flüssigkeitsmenge verbunden ist, wobei eine Volumenvergrößerung in der Zuleitung (2) erzeugt wird und zum Ausbringen von Flüssigkeitstropfen (23) ein Impuls auf diese hervorgerufen wird, der sich auf die in der Zuleitung (2) befindliche Flüssigkeitsmenge überträgt, **dadurch gekennzeichnet, dass** der Zuleitung (2) mindestens eine erste und eine zweite Einrichtung (4, 5) zur Querschnittsveränderung zugeordnet sind, die die Zuleitung (2) während des Verbindens der Zuleitung (2) mit einem Vorlagengefäß verschließen, wonach die zweite Einrichtung (5) die Zuleitung (2) freigibt und diese nach Erschöpfung des bevorrateten Flüssigkeitsvolumens mit einem ein Spülmedium enthaltenden Behälter (3) verbunden wird.

2. Verfahren gemäß Anspruch 1, **dadurch gekennzeichnet, dass** die Einrichtungen (4, 5) als Quetschventile ausgebildet sind.

3. Verfahren gemäß Anspruch 1, **dadurch gekennzeichnet, dass** die Pipettierspitze (1) zum Ansaugen einer Flüssigkeitsmenge in ein Vorlagengefäß eintaucht.

4. Verfahren gemäß Anspruch 3, **dadurch gekennzeichnet, dass** eine die Pipettierspitze (1) aufnehmende Schiene (14) in einer Zustellrichtung (17) bewegbar ist.

5. Verfahren gemäß Anspruch 4, **dadurch gekennzeichnet, dass** die Bewegung der Schiene (14) pneumatisch elektromagnetisch oder elektromotorisch bewirkt wird.

6. Verfahren gemäß Anspruchsl, **dadurch gekennzeichnet, dass** das zur Bemessung der anzusaugenden Flüssigkeitsmenge an der zum Ansaugen zu öffnenden Einrichtung (5) zur Querschnittsveränderung ein justierbarer Anschlag (24) vorgesehen ist.

7. Verfahren gemäß Anspruch 1, **dadurch gekennzeichnet, dass** die aufzubringende Flüssigkeitsmenge im Bereich zwischen 100pl und 1µl vorzugsweise im Bereich zwischen 500pl und 10nl liegt.

8. Verfahren gemäß Anspruchsl, **dadurch gekennzeichnet, dass** während des Aufbringens der kleinen Flüssigkeitsmenge die Zuleitung (2) durch eine Einrichtung (4) zur Querschnittsveränderung verschlossen wird.

9. Verfahren gemäß Anspruch 1, **dadurch gekennzeichnet, dass** der sich auf die in der Zuleitung (2) befindliche Flüssigkeitsmenge übertragende Impuls mittels eines Hammers (6) der elektromagnetisch oder pneumatisch betätigbar ist, erzeugt wird.

10. Verfahren gemäß Anspruch 1, **dadurch gekennzeichnet, dass** der Impuls durch einen justierbaren Anschlag (25) auf die Zuleitung (2) übertragbar ist, dessen Betätigungsweg einstellbar ist.

11. Verfahren gemäß Anspruch 10, **dadurch gekennzeichnet, dass** der das Volumen des Flüssigkeitstropfens (23) bestimmende Betätigungsweg mittels eines Stellmittels (9) veränderbar ist.

12. Vorrichtung zum Aufbringen kleiner Flüssigkeitsmengen, *insbesondere gemäß des Verfahrens nach Anspruch 1*, auf ein Substrat (13) mittels einer Kapillare (1), die mit einer flexiblen Zuleitung (2) verbunden ist, **dadurch gekennzeichnet, dass** der flexiblen Zuleitung (2) zwei voneinander unabhängig betätigbare Einrichtungen (4, 5) zur Querschnittsveränderung der Zuleitung (2) zugeordnet sind und ein einen Impuls auf die Zuleitung (2) hervorrufender Hammer (6) vorgesehen ist, dessen eine Volumenänderung an der Zuleitung (2) bewirkender Betätigungsweg einstellbar ist.

## Claims

1. A method of depositing small amounts of liquid on a substrate (13) by using a pipette tip (1), which is connected to a flexible delivery line (2), liquid being taken up by expanding the volume in the delivery line (2) and drops of liquid (23) are ejected by exposing the line to an impulse that is transmitted to the liquid contained in it, wherein the delivery line (2) is provided at least a first and a second cross-sectional control instrument (4, 5), which close the delivery line (2) while the delivery line (2) is connected to a container, whereupon the second instrument (5) releases the delivery line (2), and the latter is connected to a vessel (3) containing a rinsing liquid after the stored volume of liquid has been used up.

2. A method as claimed in claim 1, wherein the instruments (4, 5) are designed as compression valves.

3. A method as claimed in claim 1, wherein liquid is taken up by dipping the pipette tip (1) into a container.

4. A method as claimed in claim 3, wherein a rail (14) that holds the pipette tip (1) can be moved in an approach direction (17).

5. A method as claimed in claim 4, wherein the rail (14) is moved pneumatically, electromagnetically or using an electric motor.

6. A method as claimed in claim 1, wherein the amount of liquid to be taken up is metered by providing a variable stop (24) on the cross-sectional control instrument (5), which is opened to take up the liquid.

7. A method as claimed in claim 1, wherein the amount of liquid to be deposited is in the range of from 100 pl to 1 µl, preferably in the range of from 500 pl to 10 nl.

8. A method as claimed in claim 1, wherein the delivery line (2) is closed by a cross-sectional control instrument (4) while the small amount of liquid is being deposited.

9. A method as claimed in claim 1, wherein the impulse that is transmitted to the liquid contained in the delivery line (2) is generated by means of an electromagnetically or pneumatically operated hammer (6).

10. A method as claimed in claim 1, wherein the impulse can be transmitted to the delivery line (2) using a variable stop (25) whose operating distance can be altered.

11. A method as claimed in claim 10, wherein the operating distance that determines the volume of the liquid drop (23) can be changed by using a control means (9).

12. A device for depositing small amounts of liquid, in particular using the method as claimed in claim 1, on a substrate (13) by using a capillary (1), which is connected to a flexible delivery line (2), wherein the flexible delivery line (2) is provided with two independently operated instruments (4, 5) for controlling its cross section and a hammer (6) is provided for applying an impulse to the delivery line (2), and the hammer's operating distance for changing the volume in the delivery line (2) can be altered.

## Revendications

1. Procédé pour de dépôt de petites quantités de fluide sur un substrat (13) au moyen d'une pointe de pipette (1), qui est reliée avec une conduite flexible (2) au dispositif d'aspiration d'une quantité de fluide, tandis qu'une augmentation de volume est produite dans la conduite (2) et que pour faire sortir des gouttes de fluide (23) on exerce sur celle-ci une impulsion qui transfère la quantité de fluide se trouvant dans la conduite (2), **caractérisé par le fait que** sont adjoints à la conduite (2) au moins un premier et un deuxième dispositifs (4, 5) de modification de section, qui obturent la conduite (2) pendant la liaison de la conduite (2) avec un récipient d'alimentation, après quoi le deuxième dispositif (5) ouvre la conduite (2) et celle-ci est mise en relation, après épuisement du volume de fluide prédéfini, avec un récipient (3) contenant un milieu de rinçage.

2. Procédé selon la revendication 1, **caractérisé par le fait que** les dispositifs (4, 5) sont constitués de vannes à pincement.

3. Procédé selon la revendication 1, **caractérisé par le fait que** la pointe de pipette (1) pour le prélèvement d'une quantité de fluide est immergée dans un récipient d'alimentation.

4. Procédé selon la revendication 3, **caractérisé par le fait qu'**une glissière (14) portant la pointe de pipette (1) est mobile dans une direction de réglage (17).

5. Procédé selon la revendication 4, **caractérisé par le fait que** le déplacement de la glissière (14) est exercé par des moyens pneumatiques, électromagnétiques la un moteur électrique.

6. Procédé selon la revendication 1, **caractérisé par le fait qu'**une butée ajustable (24) est prévue pour la modification de la section pour la mesure de la quantité de fluide à prélever sur le dispositif (5) à ouvrir pour le prélèvement.

7. Procédé selon la revendication 1, **caractérisé par le fait que** la quantité de fluide à déposer se situe dans l'intervalle entre 100 pl et 1 µl, de préférence dans l'intervalle entre 500 pl et 10 nl.

8. Procédé selon la revendication 1, **caractérisé par le fait que** pendant le dépôt de la petite quantité de fluide la conduite (2) est obturée par un dispositif (4) pour la modification de la section.

9. Procédé selon la revendication 1, **caractérisé par le fait que** l'impulsion transférant la quantité de fluide se trouvant dans la conduite (2) est exercée au moyen d'un marteau (6) qui peut être actionné par des moyens électromagnétiques ou pneumatiques.

10. Procédé selon la revendication 1, **caractérisé par le fait que** l'impulsion peut être transmise par l'intermédiaire d'une butée ajustable (25) sur la conduite (2), dont la course utile est réglable.

11. Procédé selon la revendication 10, **caractérisé par le fait que** la course utile déterminant le volume de la goutte de fluide (23) est modifiable au moyen d'un moyen de fixation (9).

12. Dispositif pour le dépôt de petites quantités de fluide, *en particulier conformément au procédé selon la revendication 1,* sur un substrat (13) au moyen d'un capillaire (1), qui est relié à une conduite flexible (2), **caractérisé par le fait que** sont disposés sur la conduite flexible (2) deux dispositifs (4, 5) pouvant être actionnés indépendamment l'un de l'autre, pour la modification de la section de la conduite (2), et un marteau (6) exerçant une impulsion sur la conduite (2) est prévu, dont la course utile exerçant une modification de volume sur la conduite (2) est ajustable.
